# EUROPÄISCHE PATENTSCHRIFT

(11) **EP 2 079 930 B1**
(45) Veröffentlichungstag und Bekanntmachung des Hinweises auf die Patenterteilung: **05.04.2017**
(21) Anmeldenummer: 07820542.4
(22) Anmeldetag: 25.09.2007
(51) Int. Cl.: F04B 1/04, F04B 53/14, F04B 53/12

(54) **KOLBENPUMPE FÜR EIN FAHRZEUGBREMSSYSTEM MIT EINER KOLBENSTANGE**
PISTON PUMP FOR A MOTOR VEHICLE BRAKING SYSTEM, COMPRISING A PISTON ROD
POMPE À PISTON POUR SYSTÈME DE FREINAGE DE VÉHICULE, MUNIE D'UNE TIGE DE PISTON

(30) Priorität: 17.10.2006 DE 102006048902
(43) Veröffentlichungstag der Anmeldung: 22.07.2009
(73) Patentinhaber: Robert Bosch GmbH, 70442 Stuttgart (DE)
(72) Erfinder: SCHMAUTZ, Oliver, 71720 Oberstenfeld (DE); ZIMMERMANN, Marc, 71720 Oberstenfeld (DE)
(86) Internationale Anmeldenummer: PCT/EP2007/060137
(87) Internationale Veröffentlichungsnummer: WO 2008/046721

(56) Entgegenhaltungen:
- WO-A-03/004872
- WO-A-2004/072478
- WO-A-2004/088137
- WO-A1-2006/013142
- DE-A1- 19 918 124

## Beschreibung

Die Erfindung betrifft eine Kolbenpumpe für ein Fahrzeugbremssystem, mit einem Gehäuseabschnitt und einem Kolben, der in dem Gehäuseabschnitt verschiebbar geführt ist und ein Aufnahmemittel zur Aufnahme eines Einlassventils, ein an das Aufnahmemittel anschließendes Dichtelement zum Abdichten des Kolbens gegen den Gehäuseabschnitt und eine an das Dichtelement anschließende Kolbenstange aufweist. Bei der Kolbenpumpe ist ferner die Kolbenstange zweiteilig mit einem ersten und einem zweiten Kolbenstangenelement gestaltet, bei denen in dem ersten Kolbenstangenelement eine Fluideinleitöffnung zum Einleiten von Fluid in das Innere des Kolbens vorgesehen ist, und das zweite Kolbenstangenelement die Fluideinleitöffnung in axialer Richtung des Kolbens teilweise überdeckt. Eine solche Kolbenpumpe ist aus WO-A-2004/072478 bekannt.

Die für bekannte Fahrzeugbremssysteme, insbesondere mit Antiblockiersystem (Abk.: ABS), verwendeten Kolbenpumpen dienen der Steuerung des Drucks in Radbremszylindern. Beim ABS sind die Kolbenpumpen beispielsweise zum Rückfördern von Bremsflüssigkeit aus einem oder mehreren Radbremszylindern in einen Hauptbremszylinder vorgesehen. Das ABS arbeitet oft in Kombination mit einer Antischlupfregelung (Abk.: ASR). Ein weiteres bekanntes System, das sogenannte elektronische Stabilitätsprogramm (Abk.: ESP) verbessert gegenüber ABS und ASR die Fahrsicherheit um einen weiteren Schritt. Während ABS und ASR in Fahrtlängsrichtung wirken, beeinflusst ESP die Querdynamik und ist daher im Prinzip eine Querschlupfregelung. Für alle diese Systeme und auch für weitere Systeme zur Erhöhung der Fahrsicherheit kommen Kolbenpumpen zum Einsatz.

Bekannte, für Fahrzeugbremssysteme vorgesehene Kolbenpumpen bestehen unter anderem aus einem in einem Gehäuse ausgebildeten Zylinder, in dem ein Kolben längsbeweglich aufgenommen ist. Der Kolbenantrieb erfolgt meist über einen Exzenterantrieb, bei dem die Drehbewegung einer mittels eines Antriebsmotors angetriebenen Welle in eine translatorische Bewegung einer Kolbenstange des Kolbens umgesetzt wird. Die Kolbenstange wird dabei mit ihrer Stirnseite mittels eines Vorspannelements, beispielsweise in Form einer Schraubenfeder, gegen den Außenumfang des Exzenters des Exzenterantriebs gedrückt. So kann letztlich eine hin- und hergehende Pumpbewegung des Kolbens realisiert werden.

Ferner weisen bekannte Kolbenpumpen zur Steuerung der Fluid-Einströmung in der Regel ein als Sitzventil ausgebildetes Einlassventil auf. Die Einströmung von Fluid von außerhalb der Kolbenpumpe bis zu dem Einlassventil erfolgt bei bekannten Kolbenpumpen über eine in der Kolbenstange ausgebildete vergleichsweise lange Saugleitung, die einen hohen Strömungswiderstand aufweist. Dies hat zur Folge, dass bekannte, für Fahrzeugbremssysteme verwendete Kolbenpumpen keine ausreichend wirksame Druckaufbaudynamik aufweisen, da sie infolge des mit der sehr langen Saugleitung verbundenen hohen Strömungswiderstands nur verhältnismäßig langsam aufgefüllt werden können. Schließlich erfolgt die Herstellung der Kolbenstangen bekannter Kolbenpumpen über ein teueres Einstechschleifverfahren.

### Zugrundeliegende Aufgabe

Der Erfindung liegt die Aufgabe zugrunde, eine Kolbenpumpe für ein Fahrzeugbremssystem anzugeben, die schnell aufgefüllt werden kann, um eine gute Druckaufbaudynamik zu erzielen, und die zudem kostengünstig hergestellt werden kann.

### Erfindungsgemäße Lösung

Diese Aufgabe ist erfindungsgemäß mit einer Kolbenpumpe gemäß Anspruch 1 gelöst.

Erfindungsgemäß ist die Kolbenstange zweiteilig gestaltet, umfassend ein erstes und ein zweites Kolbenstangenelement. Die zweiteilige Gestaltung der erfindungsgemäßen Kolbenstange weist gegenüber einer aus dem Stand der Technik bekannten einteiligen Gestaltung der Kolbenstange den Vorteil auf, dass die einzelnen Kolbenstangenelemente für sich genommen kostengünstig, beispielsweise als Kaltschlagteil, Dreh- und Bohrteil, Dreh- und Sägeteil oder aus einem verschweißten Rohr hergestellt werden können. In dem ersten Kolbenstangenelement ist eine Fluideinleitöffnung zum Einleiten von Fluid in das Innere des Kolbens vorgesehen. Erfindungsgemäß ist daher keine sich entlang der gesamtem Kolbenstange erstreckende Saugleitung vorgesehen, wie es bei den bekannten Kolbenpumpen, die für Fahrzeugbremssysteme verwendet werden, der Fall ist. Vorzugsweise ist die Fluideinleitöffnung derart gestaltet, dass über die Fluideinleitöffnung einströmendes Fluid mit möglichst geringen Strömungswiderstand in das Innere des Kolbens einströmen kann. Um den Einströmungsweg möglichst kurz zu gestalten, überdeckt das zweite Kolbenstangenelement in axialer Richtung des Kolbens teilweise die Fluideinleitöffnung. Insgesamt betrachtet kann so erfindungsgemäß besonders kostengünstig eine Kolbenpumpe für ein Fahrzeugbremssystem bereitgestellt werden, die schnell aufgefüllt werden kann, und die daher eine gute Druckaufbaudynamik aufweist.

Bei der erfindungsgemäßen Kolbenpumpe ist ferner das Dichtelement einstückig mit dem Aufnahmemittel ausgebildet. Dies hat den Vorteil, dass im Unterschied zu den aus dem Stand der Technik bekannten Kolbenpumpen die Funktionen des Dichtelements und des zur Aufnahme eines Einlassventils vorgesehenen Aufnahmemittels von lediglich einem Bauteil übernommen werden. So wird erfindungsgemäß gegenüber den bekannten Lösungen ein Bauteil eingespart, mit der Folge, dass die Montage und Demontage der erfindungsgemäßen Kolbenpumpe sehr einfach vorgenommen werden kann und die Toleranzkette deutlich herabgesetzt wird. Ferner können durch die erfindungsgemäß realisierte Einsparung eines Bauteils die Herstellungskosten der Kolbenpumpe deutlich reduziert werden. Schließlich kann die erfindungsgemäße Kolbenpumpe durch die Einsparung eines Bauteils gegenüber bekannten Pumpen deutlich kleiner ausgeführt werden.

Ferner ist gemäß der Erfindung zwischen dem Dichtelement und der Kolbenstange eine Schnappverbindung ausgebildet, um die Kolbenstange am Dichtelement vorzumontieren. Die Schnappverbindung, welche vorzugsweise an dem Dichtelement ausgebildet ist, umgreift beispielsweise eine an der Kolbenstange ausgebildete Schulter. Mittels der erfindungsgemäßen Schnappverbindung kann die Kolbenstange während der Montage der Kolbenpumpe, insbesondere während der Montage am Zylinder über die erfindungsgemäß bereitgestellte Schnappfunktion am Dichtelement gehalten werden. Des weiteren wird mittels der erfindungsgemäßen Schnappverbindung die Zylindergehäuseinnenwand gegenüber der Außenseite des Kolbens geschützt. Mittels der erfindungsgermäßen Schnappverbindung wird so eine eventuelle Berührung des Kolbens mit der Zylindergehäuseinnenwand ausgeschlossen, wodurch Beschädigungen an der Zylindergehäuseinnenwand oder an dem Kolben vermieden werden.

### Vorteilhafte Weiterbildungen der Erfindung

Bei einer vorteilhaften Weiterbildung der Erfindung ist dass das erste Kolbenstangenelement an dem zweiten Kolbenstangenelement an dem die Fluideinleitöffnung teilweise überdeckenden Abschnitt des zweiten Kolbenstangenelements mittels einer Presspassung gehaltert, um kostengünstig eine feste beständige Verbindung zwischen den beiden Kolbenstangenelementen zu schaffen.

Bei einer praktischen Weiterbildung der Erfindung ist die Fluideinleitöffnung mittels einer das erste Kolbenstangenelement radial durchsetzenden Bohrung gestaltet, welche sich ohne großen Fertigungsaufwand einfach und kostengünstig bewerkstelligen lässt.

Bei einer weiteren praktischen Weiterbildung der Erfindung ist die Fluideinleitöffnung mittels einem das erste Kolbenstangenelement radial durchsetzenden, sich in axialer Richtung erstreckenden Schlitz gestaltet. Mittels einer Fluideinleitöffnung, die in Form eines derartigen kostengünstig herstellbaren Schlitzes ausgebildet ist, kann Fluid von außerhalb der zweiteiligen Kolbenstange mit einem sehr geringen Strömungswiderstand in das Innere des Kolbens strömen.

Bei einer vorteilhaften Weiterbildung der Erfindung weist das Einlassventil einen Ventilsitz auf, der an der Kolbenstange ausgebildet ist. Diese erfindungsgemäße konstruktive Lösung ermöglicht eine einfache Montage bzw. Demontage der Kolbenpumpe. So ist beispielsweise zur Demontage der Kolbenpumpe die an das Dichtelement anschließende Kolbenstange von dem Dichtelement zu entfernen. Anschließend kann das Einlassventil, das vorzugsweise als Sitzventil ausgebildet ist, samt seiner einzelnen Komponenten, umfassend beispielsweise einen Absperrkörper und ein Federelement, ohne großen Aufwand aus dem einstückig mit dem Dichtelement ausgebildeten Aufnahmemittel entnommen werden. Das in dem Zylinder der Kolbenpumpe längsbeweglich aufgenommene Dichtelement, an dem das Aufnahmemittel einstückig ausgebildet ist, kann schließlich problemlos aus dem Zylinder entnommen werden.

Bei einer weiteren vorteilhaften Weiterbildung der Erfindung ist ein Vorspannelement, vorzugsweise in Form einer Schraubenfeder vorgesehen, das an dem Dichtelement anliegt und mit dem der Kolben in Richtung aus dem Gehäuseabschnitt herausgedrängt ist. Die von dem Vorspannelement auf das Dichtelement übertragene Vorspannkraft hält den Kolben stets in Außenlage. Auf diese Weise kann erfindungsgemäß die außenliegende Stirnseite des Kolbens gegen den Exzenter eines Exzenterantriebs gedrückt werden, um so eine von dem Exzenterantrieb bereitgestellte translatorische Antriebsbewegung in eine hin- und hergehende Pumpbewegung des Kolbens umzusetzen. Mittels des Vorspannelements kann die erfindungsgemäße Kolbenpumpe in Verbindung mit Exzenterantrieben verwendet werden, die in Bremssystemen zum Antrieb der Kolbenpumpen vorzugsweise verwendet werden.

Bei einer praktischen Weiterbildung der Erfindung ist das Dichtelement in Form eines Dichtrings mit einer Dichtringöffnung ausgebildet und die Kolbenstange ist in der Dichtringöffnung aufgenommen, wobei die Kolbenstange vorzugsweise mit einer Spielpassung in der Dichtringöffnung aufgenommen ist. Mittels einer Spielpassung kann die Kolbenstange problemlos in der Dichtringöffnung zentriert werden. Ferner ermöglicht eine Spielpassung ein für Demontagezwecke erforderliches problemloses Lösen der Kolbenstange aus der Dichtringöffnung.

### Kurzbeschreibung der Zeichnungen

Nachfolgend werden Ausführungsbeispiele einer erfindungsgemäßen Kolbenpumpe anhand der beigefügten schematischen Zeichnungen näher erläutert. Es zeigt:
- Fig. 1: einen Längsschnitt einer erfindungsgemäßen Kolbenpumpe,
- Fig. 2a: einen teilweisen Viertelschnitt einer weiteren erfindungsgemäßen Kolbenpumpe mit einem geschlitzten Kolben,
- Fig. 2b: den teilweisen Viertelschnitt gemäß Fig. 2a bei um 45 Grad gedrehter Lage der erfindungsgemäßen Kolbenpumpe,
- Fig. 3a: einen teilweisen Viertelschnitt einer weiteren erfindungsgemäßen Kolbenpumpe mit einem gebohrten Kolben, und
- Fig. 3b: den teilweisen Viertelschnitt gemäß Fig. 3a bei um 45 Grad gedrehter Lage der weiteren erfindungsgemäßen Kolbenpumpe.

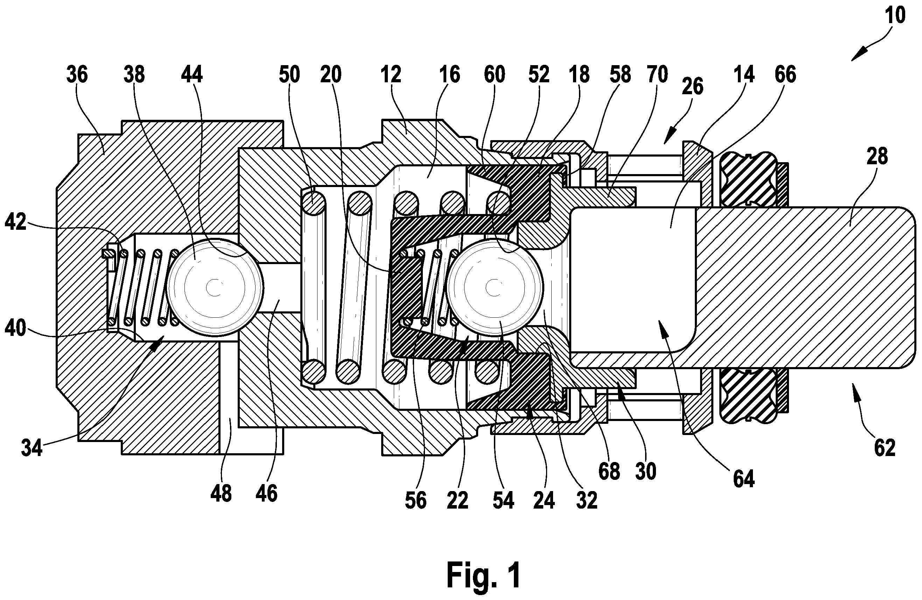

Die Fig. 1 zeigt eine erfindungsgemäße Kolbenpumpe 10, die zwei Gehäuseabschnitte 12 und 14 umfasst, wobei in dem Gehäuseabschnitt 12 eine Zylinderbohrung 16 ausgebildet ist, in der ein Kolben 26 verschiebbar geführt ist. Der Kolben 26 umfasst ein Dichtelement in Form eines Dichtrings 18, ein Aufnahmemittel 20 für ein als Kugelsitzventil ausgebildetes Einlassventil 22, welches einstückig mit dem Dichtring 18 ausgebildet ist und vorliegend als Einlassventil-Deckel ausgebildet ist, und eine Kolbenstange 62, die an den Dichtring 18 anschließt. Die Kolbenstange 62 ist zweistückig ausgebildet und umfasst zwei Kolbenstangenelemente 28, 30, wobei das Kolbenstangenelement 28 mittels einer Presspassung fest in dem Kolbenstangenelement 30 aufgenommen ist, um eine kraftschlüssige Verbindung zwischen den beiden Kolbenstangenelementen 28, 30 zu schaffen. Durch die vorgesehene zweistückige Ausbildung der Kolbenstange 62 kann eine kostengünstig herzustellende Kolbenstange 62 realisiert werden, da erfindungsgemäß ein kostengünstiges stangenförmiges Kolbenstangenelement 28 mit einem Kolbenstangenelement 30 verbunden wird, das sehr kostengünstig in Form eines Kunststoffspritzteils, Drehteils, Gussteils oder Kaltschlagteils bereitgestellt werden kann. In dem Kolbenstangenelement 28 kann dabei ferner besonders kostengünstig eine unten noch genauer erläuterte Fluideinleitöffnung 64 ausgebildet werden.

Das als Einlassventil-Deckel gestaltete Aufnahmemittel 20 und der Dichtring 18 bilden zusammen eine einstückige Ventildeckel/Dichtring-Kombination 24. Das Kolbenstangenelement 30 ist zur Verbindung der Kolbenstange 62 mit dem Dichtring 18 in der Dichtringöffnung 32 des Dichtrings 18 aufgenommen.

Die Kolbenpumpe 10 weist ferner ein als Kugelsitzventil ausgebildetes Auslassventil 34 auf, das innerhalb eines Auslassventil-Deckels 36 angeordnet ist, wobei eine Kugel 38 des Kugelsitzventils 34 in einer in dem Auslassventil-Deckel 36 ausgebildeten Aufnahme 40 geführt ist. Der Auslassventil-Deckel 36 kann teilweise spanabhebend oder kaltgeschlagen gefertigt sein. Eine sich am Deckelboden abstützende Schraubenfeder 42 drückt die Kugel 38 gegen einen im Gehäuseabschnitt 12 der Kolbenpumpe 10 ausgebildeten Ventilsitz 44, der an ein in dem Gehäuseabschnitt 12 ausgebildetes Auslassloch 46 angrenzt. Von dem Auslassloch 46 durch das Auslassventil 34 strömende Bremsflüssigkeit strömt über einen Radialkanal 48 zwischen dem Auslassventil-Deckel 36 und dem Gehäuseabschnitt 12 in Richtung Pumpen-Auslass (nicht dargestellt).

In der in dem Gehäuseabschnitt 12 ausgebildeten Zylinderbohrung 16 ist ferner ein Vorspannelement in Form einer Schraubenfeder 50 angeordnet, die mit einem Ende an dem Dichtring 18 anliegt und sich mit dem anderen Ende am Boden des Gehäuseabschnitts 12 abstützt. Die Schraubenfeder 50 steht unter Vorspannung, um die zweistückige Kolbenstange 62 über den Dichtring 18, an dem die Kolbenstange 62 mit ihrer innerhalb der Kolbenpumpe 10 angeordneten Stirnseite anliegt, gegen den Umfang des Exzenters eines Exzenterantriebs (nicht dargestellt) zu drücken. So kann die außenliegende Stirnseite des Kolbenstangenelements 28 stets in Anlage zu dem Exzenter gehalten werden. Durch rotierenden Antrieb des Exzenters wird der gesamte Kolben 26 zu einer axial hin- und hergehenden Hubbewegung angetrieben, die in bekannter Weise eine Förderung von Bremsflüssigkeit bewirkt.

Der Ventilsitz 52 des Kugel-Einlassventils 22, der beispielsweise durch Kugelprägen hergestellt werden kann, ist stirnseitig an dem Kolbenstangenelement 30 ausgebildet. Diese erfindungsgemäße Ausbildung des Ventilsitzes 52 an dem Kolbenstangenelement 30 der Kolbenstange 62 bietet in Verbindung mit der erfindungsgemäßen einstückigen Ausbildung des Dichtrings 18 mit dem als Einlassventil-Deckel gestalteten Aufnahmemittel 20 in Form der Ventildeckel/Dichtring-Kombination 24 deutliche Vorteile bei der Montage bzw. Demontage der Kolbenpumpe 10. Zur Demontage der Kolbenpumpe 10 ist das mit einer Spielpassung in der Dichtringöffnung 32 aufgenommene Kolbenstangenelement 30 aus der Dichtringöffnung 32 zu ziehen. Die erfindungsgemäße vorgesehene Spielpassung ermöglicht hierbei ein problemlosen Lösen des Kolbenstangenelements 30 aus dem Dichtring 18. Die einzelnen Komponenten des Sitzventils 22, also die Kugel 54 und die Schraubenfeder 56 können anschließend problemlos aus dem Aufnahmemittel 20 entnommen werden. Schließlich kann nach Herausziehen der einstückig ausgebildeten Ventildeckel/Dichtring-Kombination 24 aus der Zylinderbohrung 16 die Schraubenfeder 50 aus der Zylinderbohrung 16 entnommen werden. Entsprechend einfach gestaltet sich auch die Montage der Kolbenpumpe 10, wobei die vorgesehene Spielpassung eine problemlose Zentrierung des Kolbenstangenelements 30 in der Dichtringöffnung 32 ermöglicht.

An dem Dichtring 18 ist ferner eine Schnappverbindung in Form einer Schnappnase 58 ausgebildet, die eine am dem Kolbenstangenelement 30 ausgebildete Schulter umgreift. Mittels der Schnappnase 58 kann die Kolbenstange 62 während der Montage der Kolbenpumpe 10, insbesondere während der Montage an der Zylinderbohrung 16 an dem Dichtring 18 gehalten werden, wodurch die Montage der erfindungsgemäßen Kolbenpumpe 10 wesentlich vereinfacht wird. Die so erfindungsgemäß realisierte Haltefunktion kann alternativ auch durch eine thermische Verformung nach Aufstecken der Ventildeckel/Dichtring-Kombination 24 auf das Kolbenstangenelement 30 realisiert werden. Die Schnappnase 58 übernimmt erfindungsgemäß lediglich die beschriebene, für Montagezwecke vorteilhafte Haltefunktion. Während des Betriebs der Kolbenpumpe 10 wird durch die Federkraft der Schraubenfeder 50 sichergestellt, dass die Ventildeckel/Dichtring-Kombination 24 permanent, trotz der für Montagezwecke vorteilhaften Spielpassung, an dem Kolbenstangenelement 30 in axialer Richtung anliegt. Ferner wirkt die Schnappnase 58 schützend zwischen der Zylinderbohrung 16 und dem Kolbenstangenelement 30. An dem Dichtring 18 der Ventildeckel/Dichtring-Kombination 24 ist ferner eine Dichtlippe 60 ausgebildet, welche den Zylinderraum zwischen Kolben 26 und Zylinderbohrung 16 radial druckdicht abschließt.

In dem Kolbenstangenelement 28 ist eine Fluideinleitöffnung 64 zum Einleiten von Fluid in das Innere des Kolbens 26 vorgesehen, die vorliegend in Form eines einseitig radial offenen Schlitzes 66 ausgebildet ist, welcher sich in axialer Richtung erstreckt. Mittels des Schlitzes 66 kann Fluid von außerhalb des Kolbenstangenelements 28 mit einem sehr geringen Strömungswiderstand in das Innere des Kolbens 26 einströmen. Das Fluid strömt nach Durchströmung des Schlitzes 66 in eine in dem Kolbenstangenelement 30 ausgebildete, sich axial erstreckende Öffnung 68 , die sich bis zu dem Einlassventil 22 erstreckt. Erfindungsgemäß sind sowohl der Schlitz 66 als auch die Öffnung 68 zur Minimierung des Strömungswiderstands sehr groß dimensioniert. Die erfindungsgemäße Kolbenpumpe 10 kann so schnell gefüllt werden, wodurch eine gute Druckaufbaudynamik erzielt werden kann.

Das zweite Kolbenstangenelement 30 überdeckt teilweise die Fluideinleitöffnung 64 in axialer Richtung des Kolbens 26. Auf diese Weise kann erfindungsgemäß der Strömungsweg möglichst kurz gehalten werden, um einen möglichst geringen Strömungswiderstand zu schaffen. Das erste Kolbenstangenelement 28 ist an dem zweiten Kolbenstangenelement 30 an dem die Fluideinleitöffnung 64 teilweise überdeckenden Abschnitt 70 des zweiten Kolbenstangenelements 30 mittels einer Presspassung gehaltert.

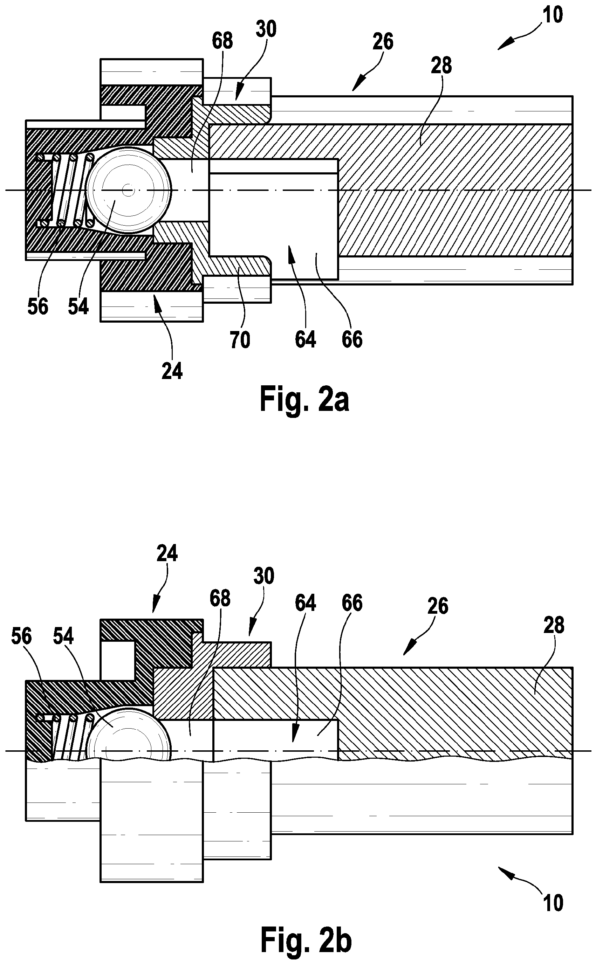

Die Fig. 2a und 2b zeigen Viertelschnittansichten einer weiteren erfindungsgemäßen Kolbenpumpe 10 mit einem ebenfalls geschlitzten Kolben 26, Der bei dem Kolben 26 gemäß Fig. 2a und 2b ausgebildete Schlitz 66 durchsetzt das Kolbenstangenelement 28 diametral und ermöglicht auch bei dieser Kolbenpumpe 10 ein sehr schnelle Füllung des Inneren des Kolbens 26. Auch hier überdeckt das zweite Kolbenstangenelement 30 mit einem überdeckenden Abschnitt 70 teilweise die Fluideinleitöffnung 64 in Form des Schlitzes 66 in axialer Richtung des Kolbens 26.

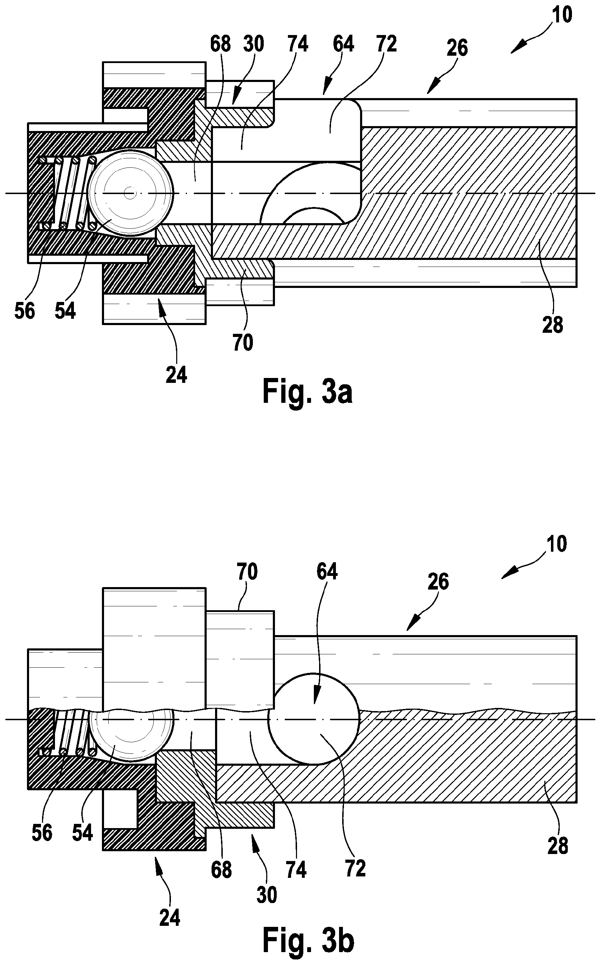

Die Fig. 3a und 3b zeigen Schnittansichten einer weiteren erfindungsgemäßen Kolbenpumpe mit einem gebohrten Kolben 26.

Bei dieser erfindungsgemäßen Ausführungsform ist die Fluideinleitöffnung 64 in Form einer das Kolbenstangenelement 28 diametral durchsetzenden Radialbohrung 72 und einer sich quer dazu erstreckenden zweiten Axialbohrung 74 gestaltet. Hierbei zeigt insbesondere die Fig. 3b, deren Schnittflächen gegenüber den Schnittflächen der Fig. 3a um 45 Grad verdreht ist, wie die Radialbohrung 72 von einem überdeckenden Abschnitt 70 des Kolbenstangenelements 30 teilweise überdeckt wird.

### Bezugszeichenliste

- 10: Kolbenpumpe
- 12: Gehäuseabschnitt
- 14: Gehäuseabschnitt
- 16: Zylinderbohrung
- 18: Dichtring
- 20: Einlassventil-Deckel
- 22: Einlassventil
- 24: Ventildeckel/Dichtring-Kombination
- 26: Kolben
- 28: Kolbenstangenelement
- 30: Kolbenstangenelement
- 32: Dichtringöffnung
- 34: Auslassventil
- 36: Auslassventil-Deckel
- 38: Kugel (Auslassventil)
- 40: Aufnahme (Auslassventil)
- 42: Schraubenfeder (Auslassventil)
- 44: Ventilsitz (Auslassventil)
- 46: Auslassloch
- 48: Radialkanal
- 50: Schraubenfeder (Vorspannelement)
- 52: Ventilsitz (Einlassventil)
- 54: Kugel (Einlassventil)
- 56: Schraubenfeder (Einlassventil)
- 58: Schnappnase
- 60: Dichtlippe
- 62: Kolbenstange
- 64: Fluideinleitöffnung
- 66: Radialschlitz
- 68: Öffnung im Kolbenstangenelement 30
- 70: Abschnitt (überdeckend) des Kolbenstangenelements 30
- 72: Radialbohrung
- 74: Axialbohrung

## Patentansprüche

1. Kolbenpumpe (10) für ein Fahrzeugbremssystem, mit einem Gehäuseabschnitt (12) und einem Kolben (26), der in dem Gehäuseabschnitt (12) verschiebbar geführt ist und
ein Aufnahmemittel (20) zur Aufnahme eines Einlassventils (22), ein an das Aufnahmemittel (20) anschließendes Dichtelement (18) zum Abdichten des Kolbens (26) gegen den Gehäuseabschnitt (12) und eine an das Dichtelement (18) anschließende Kolbenstange (62) aufweist,
bei der die Kolbenstange (62) zweiteilig mit einem ersten (28) und einem zweiten Kolbenstangenelement (30) gestaltet ist, bei denen in dem ersten Kolbenstangenelement (28) eine Fluideinleitöffnung (64) zum Einleiten von Fluid in das Innere des Kolbens (26) vorgesehen ist, und das zweite Kolbenstangenelement (30) die Fluideinleitöffnung (64) in axialer Richtung des Kolbens (26) teilweise überdeckt, und
bei der das Dichtelement (18) einstückig mit dem Aufnahmemittel (20) ausgebildet ist und zwischen dem Dichtelement (18) und der Kolbenstange (62) eine Scbnappverbindung (58) ausgebildet ist.

2. Kolbenpumpe nach Anspruch 1,
**dadurch gekennzeichnet, dass** das erste Kolbenstangenelement (28) an dem zweiten Kolbenstangenelement (30) an dem die Fluideinleitöffnung (64) teilweise
überdeckenden Abschnitt (70) des zweiten Kolbenstangenelements (30) mittels einer Presspassung gehaltert ist.

3. Kolbenpumpe nach Anspruch 1 oder 2,
**dadurch gekennzeichnet, dass** die Fluideinleitöffnung (64) mittels einer das erste Kolbenstangenelement (28) radial durchsetzenden Bohrung gestaltet ist.

4. Kolbenpumpe nach Anspruch 1 oder 2,
**dadurch gekennzeichnet, dass** die Fluideinleitöffnung (64) mittels einem das erste Kolbenstangenelement (28) radial durchsetzenden, sich in axialer Richtung
erstreckenden Schlitz (66) gestaltet ist.

5. Kolbenpumpe nach einem der Ansprüche 1 bis 4,
**dadurch gekennzeichnet, dass** das Einlassventil (22) einen Ventilsitz (52) aufweist, der an der Kolbenstange (62) ausgebildet ist.

6. Kolbenpumpe nach einem der Ansprüche 1 bis 5,
**dadurch gekennzeichnet, dass** ein Vorspannelement, vorzugsweise in Form einer Schraubenfeder (50) vorgesehen ist, das an dem Dichtelement (18) anliegt und mit dem der Kolben (26) in Richtung aus dem Gehäuseabschnitt (12) herausgedrängt ist.

7. Kolbenpumpe nach einem der Ansprüche 1 bis 6,
**dadurch gekennzeichnet, dass** das Dichtelement (18) in Form eines Dichtrings mit einer Dichtringöffnung (32) ausgebildet und die Kolbenstange (62) in der Dichtringöffnung (32) aufgenommen ist.

8. Kolbenpumpe nach Anspruch 7,
**dadurch gekennzeichnet, dass** die Kolbenstange (62) mit einer Spielpassung in der Dichtringöffnung (32) aufgenommen ist.

## Claims

1. Piston pump (10) for a vehicle brake system, having a housing section (12) and a piston (26) which is guided displaceably in the housing section (12) and has a receiving means (20) for receiving an inlet valve (22), a sealing element (18) which adjoins the receiving means (20) for sealing the piston (26) against the housing section (12), and a piston rod (62) which adjoins the sealing element (18), in which piston pump (10) the piston rod (62) is of two-piece design with a first (28) and a second piston rod element (30), in which a fluid introduction opening (64) for introducing fluid into the interior of the piston (26) is provided in the first piston rod element (28), and the second piston rod element (30) covers the fluid introduction opening (64) partially in the axial direction of the piston (26), and in which piston pump (10) the sealing element (18) is configured in one piece with the receiving means (20), and a snap-action connection (58) is configured between the sealing element (18) and the piston rod (62).

2. Piston pump according to Claim 1, **characterized in that** the first piston rod element (28) is secured on the second piston rod element (30) by means of an interference fit on that section (70) of the second piston rod element (30) which covers the fluid introduction opening (64) partially.

3. Piston pump according to Claim 1 or 2, **characterized in that** the fluid introduction opening (64) is configured by means of a bore which penetrates the first piston rod element (28) radially.

4. Piston pump according to Claim 1 or 2, **characterized in that** the fluid introduction opening (64) is configured by means of a slot (66) which penetrates the first piston rod element (28) radially and extends in the axial direction.

5. Piston pump according to one of Claims 1 to 4, **characterized in that** the inlet valve (22) has a valve seat (52) which is configured on the piston rod (62).

6. Piston pump according to one of Claims 1 to 5, **characterized in that** a prestressing element is provided, preferably in the form of a helical spring (50), which prestressing element bears against the sealing element (18), and by way of which prestressing element the piston (26) is pushed in the direction out of the housing section (12).

7. Piston pump according to one of Claims 1 to 6, **characterized in that** the sealing element (18) is configured in the form of a sealing ring with a sealing ring opening (32), and the piston rod (62) is received in the sealing ring opening (32).

8. Piston pump according to Claim 7, **characterized in that** the piston rod (62) is received in the sealing ring opening (32) with a clearance fit.

## Revendications

1. Pompe à piston (10) pour un système de freinage de véhicule, comprenant une portion de boîtier (12) et un piston (26) qui est guidé de manière déplaçable dans la portion de boîtier (12) et présente un moyen de réception (20) pour recevoir une soupape d'admission (22), un élément d'étanchéité (18) se raccordant au moyen de réception (20) pour l'étanchéité du piston (26) contre la portion de boîtier (12) et une tige de piston (62) se raccordant à l'élément d'étanchéité (18).
dans laquelle la tige de piston (62) est réalisée en deux parties avec un premier (28) et un deuxième (30) élément de tige de piston, une ouverture d'introduction de fluide (64) pour introduire du fluide à l'intérieur du piston (26) étant prévue dans le premier élément de tige de piston (28) et le deuxième élément de tige de piston (30) recouvrant en partie l'ouverture d'introduction de fluide (64) dans la direction axiale du piston (26), et
dans laquelle l'élément d'étanchéité (18) est réalisé d'une seule pièce avec le moyen de réception (20) et une connexion par encliquetage (58) est réalisée entre l'élément d'étanchéité (18) et la tige de piston (62).

2. Pompe à piston selon la revendication 1, **caractérisée en ce que** le premier élément de tige de piston (28) est fixé au moyen d'un ajustement par pressage au deuxième élément de tige de piston (30) au niveau de la portion (70) du deuxième élément de tige de piston (30) recouvrant en partie l'ouverture d'introduction de fluide (64).

3. Pompe à piston selon la revendication 1 ou 2, **caractérisée en ce que** l'ouverture d'introduction de fluide (64) est configurée au moyen d'un alésage traversant radialement le premier élément de tige de piston (28).

4. Pompe à piston selon la revendication 1 ou 2, **caractérisée en ce que** l'ouverture d'introduction de fluide (64) est réalisée au moyen d'une fente (66) s'étendant dans la direction axiale, traversant radialement le premier élément de tige de piston (28).

5. Pompe à piston selon l'une quelconque des revendications 1 à 4, **caractérisée en ce que** la soupape d'admission (22) présente un siège de soupape (52) qui est réalisé au niveau de la tige de piston (62).

6. Pompe à piston selon l'une quelconque des revendications 1 à 5,
**caractérisée en ce qu'**un élément de précontrainte, de préférence sous la forme d'un ressort hélicoïdal (50) est prévu, lequel s'applique contre l'élément d'étanchéité (18) et est repoussé dans la direction à l'écart de la portion de boîtier (12) par le piston (26).

7. Pompe à piston selon l'une quelconque des revendications 1 à 6,
**caractérisée en ce que** l'élément d'étanchéité (18) est réalisé sous la forme d'une bague d'étanchéité avec une ouverture de bague d'étanchéité (32) et la tige de piston (62) est reçue dans l'ouverture de la bague d'étanchéité (32).

8. Pompe à piston selon la revendication 7, **caractérisée en ce que** la tige de piston (62) est reçue avec un ajustement avec jeu dans l'ouverture de la bague d'étanchéité (32).
